# FASCICULE DE BREVET EUROPEEN

(11) **EP 0 674 136 B1**
(45) Date de publication et mention de la délivrance du brevet: **27.01.1999**
(21) Numéro de dépôt: 95400571.6
(22) Date de dépôt: 15.03.1995
(51) Int. Cl.: F24D 3/14

(54) **Dalles d'isolation pour systèmes de chauffage et/ou de climatisation intégrés et procédé de réalisation de telles dalles**
Wärmedämmplatte für integrierte Heizungs- und/oder Klimatisierungsanlagen und Verfahren zur Herstellung solcher Platten
Insulating tile for integrated heating and/or aircondition system and process for making such plates

(30) Priorité: 21.03.1994 FR 9403262
(43) Date de publication de la demande: 27.09.1995
(73) Titulaire: ISOBOX TECHNOLOGIES, 92024 Nanterre Cedex (FR)
(72) Inventeur: Barbarit, André, F-94120 Fontenay-sous-Bois (FR)
(74) Mandataire: Orès, Bernard

(56) Documents cités:
- CH-A- 663 812
- DE-A- 3 116 963

## Description

L'Invention se rapporte à des dalles d'isolation thermique et phonique propres à entrer dans la constitution de systèmes de chauffage et/ou de rafraîchissement intégrés et à un procédé de réalisation de telles dalles.

Elle vise, notamment, des dalles pour systèmes de climatisation intégrés dans les planchers dans lesquels des tubes en matière plastique servent à la circulation d'un fluide chauffant ou réfrigérant et qui trouvent application dans la construction de maisons, d'immeubles à usage d'habitation ou de bureaux ou encore de bâtiments divers tels qu'écoles, usines, aéroports ou complexes de loisirs.

On connaît déjà par FR-A-2 577 961 des dalles isolantes consistant en des plaques moulées de polystyrène expansé qui présentent, sur une de leurs faces, des couronnes contiguës de plots formant un motif régulier pour le support, le guidage et le blocage d'un tube en matière plastique destiné à la circulation d'un fluide et dont les rives sont munies sur toute leur longueur de feuillures pour l'assemblage de dalles adjacentes.

Ces dalles sont propres à être posées directement sur la dalle en béton qui constitue le sol porteur. Après la mise en place suivant une géométrie prédéterminée d'un ou plusieurs tubes destinés à la circulation du fluide chauffant ou réfrigérant dans les logements ménagés par les couronnes de plots des dalles d'isolation et le raccordement des extrémités des tubes à un collecteur, les dalles d'isolation sont recouvertes d'un quadrillage métallique, puis d'une dalle de béton de plusieurs centimètres d'épaisseur. Cette dernière peut alors recevoir un revêtement de sol tel qu'un carrelage, un parquet ou une moquette.

La résistance mécanique que doivent présenter de telles dalles d'isolation exige en pratique l'utilisation de polystyrène expansé de masse volumique au moins égale à 25 kg/m³ dont les propriétés d'atténuation phonique sont médiocres.

Pour pallier cet inconvénient, il a été proposé de munir les dalles d'isolation, sur la face opposée à celle portant les plots de support et de blocage du tube, d'un quadrillage dense de plots de petite taille, moulés dans la masse. Cependant, ces plots ne parviennent pas à assurer une isolation phonique réellement satisfaisante.

Il a été par ailleurs proposé dans la Demande de Brevet CH 663 812 d'utiliser, dans des systèmes de climatisation intégrés, des dalles aptes à assurer une isolation à la fois thermique et phonique qui sont constituées de deux matériaux plastiques expansés (polyuréthanne, polystyrène, ...) superposés et dans l'épaisseur desquelles est prévu un réseau de creusures pour l'installation du tube de circulation du fluide. L'utilisation de ces dalles n'est toutefois pas satisfaisante. En effet, les creusures, outre de limiter les possibilités d'orientation du tube de circulation du fluide, affectent notablement la résistance mécanique des matériaux qui les constituent, de sorte qu'il est nécessaire de prévoir aux points de convergence de ces creusures la présence de pièces de renfort, ce qui complique la fabrication de ces dalles et en grève le coût. De plus, l'installation du tube de circulation du fluide dans l'épaisseur des dalles s'oppose à un enrobage de ce tube dans la chape de béton à une diffusion thermique satisfaisante en condition d'utilisation.

La Demanderesse s'est donc fixé pour but de fournir des dalles d'isolation pour systèmes de chauffage et/ou de rafraîchissement intégrés qui présentent des propriétés d'isolation phonique nettement améliorées par rapport aux dalles de l'art antérieur sans compromettre les qualités mécaniques, ni les propriétés d'isolation thermique de ces dalles, ni l'efficacité du système de chauffage et de rafraîchissement.

C'est également un but de l'Invention de fournir de telles dalles d'isolation dont l'assemblage tout comme l'installation du tube de circulation du fluide peuvent être effectués avec une grande facilité.

C'est aussi un but de l'Invention de fournir de telles dalles d'isolation qui permettent d'éviter lors de la coulée de la dalle de béton destinée à les recouvrir, l'infiltration de béton entre elles et la formation de ponts thermiques et acoustiques.

C'est aussi un but de l'Invention de fournir de telles dalles d'isolation qui permettent de diminuer la hauteur de plancher utile à l'installation des systèmes de chauffage et/ou de rafraîchissement intégrés.

C'est également un but de l'Invention de fournir de telles dalles qui soient aisément recyclables.

C'est enfin un but de la présente Invention de fournir des dalles d'isolation qui, tout en présentant les avantages mentionnés ci-dessus, ont un coût de revient modéré.

La présente Invention a pour objet une dalle d'isolation propre à entrer dans la constitution de systèmes de chauffage et/ou de rafraîchissement intégrés, constituée de deux plaques de polystyrène expansé, de masses volumiques différentes, superposées et rendues solidaires par moulage, surmoulage, collage ou tout autre moyen, la plaque de polystyrène de masse volumique la plus élevée ayant des rives munies de moyens d'assemblage propres à permettre l'accrochage et le positionnement de dalles adjacentes, caractérisée en ce que la plaque de polystyrène de masse volumique la plus élevée présente sur sa face opposée à celle au contact de la plaque de polystyrène de masse volumique la moins élevée des groupes de plots qui délimitent des logements pour le support, le guidage et le blocage d'un tube destiné à la circulation d'un fluide chauffant ou réfrigérant, et en ce que la base de ces logements est en saillie par rapport à la face de la plaque de polystyrène de masse volumique la plus élevée sur laquelle se trouvent lesdits plots.

Avantageusement, les moyens d'assemblage sont de deux types : mâle et femelle, de formes et de dimensions conjuguées.

Dans une forme de réalisation préférée de l'Invention, la dalle d'isolation est rectangulaire et deux rives adjacentes de la plaque de polystyrène présentant la masse volumique la plus élevée sont munies de moyens d'assemblage de type mâle, tandis que les deux autres rives de ladite plaque sont munies de moyens d'assemblage de type femelle.

De manière préférée, les groupes de plots sont disposés en un damier et les moyens d'assemblage de type mâle sont logés à la base des portions de rives qui limitent un groupe de plots tandis que les moyens d'assemblage de type femelle sont ménagés dans l'épaisseur des portions de rives séparant deux groupes de plots.

Dans une exécution particulièrement avantageuse de l'Invention, les rives de la plaque de polystyrène présentant la masse volumique la plus élevée qui sont munies de moyens d'assemblage de type mâle font saillie au delà des rives sous-jacentes de la plaque de polystyrène présentant la masse volumique la moins élevée, tandis que les rives de la plaque de polystyrène ayant la masse volumique la plus élevée qui sont munies de moyens d'assemblage de type femelle sont en retrait par rapport aux rives sous-jacentes de la plaque de polystyrène ayant la masse volumique la moins élevée.

De préférence, la plaque de polystyrène présentant la masse volumique la plus élevée est une plaque de polystyrène expansé de masse volumique au moins égale à 23 kg/m³ et, de préférence, supérieure à 28 kg/m³, tandis que la plaque de polystyrène présentant la masse volumique la moins élevée est une plaque de polystyrène expansé de masse volumique inférieure à 15 kg/m³ ayant été soumis à un traitement mécanique d'élastification.

Dans une forme de réalisation particulièrement préférée, la plaque de polystyrène de masse volumique la plus élevée présente une épaisseur - à l'exception des endroits où règnent les plots - d'environ 10 mm tandis que la plaque de masse volumique la moins élevée présente une épaisseur d'environ 20 mm.

L'Invention a également pour objet un procédé de réalisation d'une dalle d'isolation telle que précédemment définie, caractérisé en ce qu'il comprend :
a) la réalisation de la plaque de polystyrène de masse volumique la moins élevée en soumettant un bloc de polystyrène expansé à un traitement mécanique d'élastification, puis en découpant dans ce bloc une plaque de dimension appropriée à la réalisation d'une dalle,
b) le surmoulage de la plaque de polystyrène de masse volumique la plus élevée sur l'une des faces de la plaque de polystyrène de masse volumique la moins élevée.

Avantageusement, le traitement mécanique d'élastification consiste à compresser ledit bloc de polystyrène expansé, par exemple au moyen d'une presse hydraulique, jusqu'à obtenir un écrasement des deux tiers de son épaisseur initiale.

Dans une forme de mise en oeuvre préférée du procédé, la plaque de polystyrène expansé de masse volumique la plus élevée est surmoulée au moyen de billes de polystyrène de masse volumique apparente supérieure à 23 kg/m³ et, de préférence, supérieure à 28 kg/m³ tandis que la plaque de polystyrène de masse volumique la moins élevée est découpée dans un bloc de polystyrène expansé de masse volumique inférieure à 15 kg/m³.

D'autres caractéristiques et avantages de l'Invention apparaîtront de la description qui suit, faite à titre d'exemple et en référence aux planches annexées dans lesquelles :
- la Figure 1 est une vue schématique en plan montrant, distantes les unes des autres, une dalle D1 selon l'Invention ainsi que deux dalles adjacentes D2 et D3 partiellement représentées ;
- la Figure 2 est une vue en perspective de la dalle D1, posée et assemblée avec la dalle D3 partiellement représentée, ainsi que de la dalle D2 en cours de pose et présentant des arrachements partiels ;
- la Figure 3 est une vue en perspective à grande échelle d'un moyen d'assemblage de type mâle et d'un moyen d'assemblage de type femelle partiellement coupé ;
- la Figure 4 est une vue en coupe selon la ligne IV-IV de la Figure 2 montrant un moyen d'assemblage de type mâle de la dalle D2 en cours d'emboîtement dans un moyen d'assemblage de type femelle de la dalle D1 ;
- la Figure 5 est une vue en coupe selon la ligne V-V de la Figure 2 illustrant le résultat de l'emboîtement d'un moyen d'assemblage de type mâle de la dalle D3 dans un moyen d'assemblage de type femelle de la dalle D1.

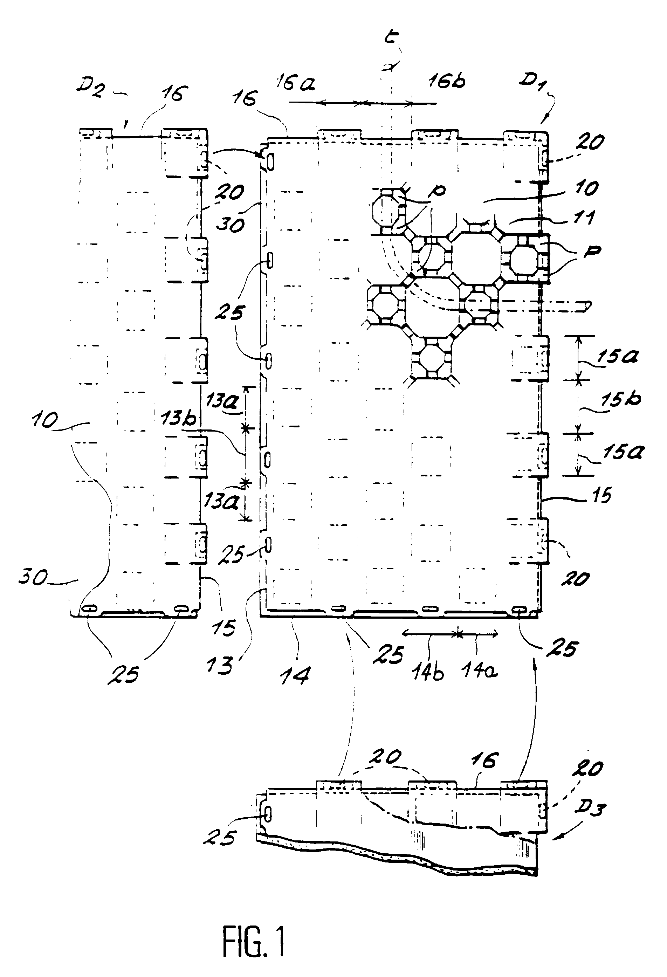

On se réfère en premier lieu à la Figure 1 qui montre, vue en plan de dessus, une dalle D1 selon l'Invention et qui est constituée de deux plaques de polystyrène expansé 10 et 30, superposées et rendues solidaires par moulage, surmoulage, collage ou tout autre moyen.

Selon une caractéristique de l'Invention, les plaques de polystyrène 10 et 30 sont constituées de polystyrène de masses volumiques différentes.

Ainsi, de façon avantageuse, la plaque de polystyrène 10 est constituée d'un polystyrène expansé de masse volumique au moins égale à 23 kg/m³ et, de préférence, supérieure à 28 kg/m³, de sorte à conférer aux dalles une résistance satisfaisante aux contraintes mécaniques auxquelles celles-ci sont naturellement soumises en condition opératoire, tandis que la plaque de polystyrène 30 est constituée d'un polystyrène de masse volumique inférieure à 15 kg/m³ ayant été soumis à un traitement mécanique d'élastification propre à améliorer la qualité d'isolation phonique de ce matériau.

Comme visible sur la Figure 1, la plaque de polystyrène 10 présente sur sa face 11 opposée à celle au contact de la plaque de polystyrène 30 des plots p, à section hexagonale, destinés à assurer le support, le guidage et le blocage d'un tube t dans lequel peut circuler un fluide.

La disposition des plots p est telle qu'ils forment par 4 des groupes ayant grossièrement la forme de carrés et les groupes ainsi formés sont disposés en un damier.

L'installation du tube t de circulation du fluide est réalisée par encliquetage de celui-ci dans les logements ménagés par les faces en regard des plots p contigus.

La base de ces logements est en saillie par rapport à la surface de la plaque de polystyrène 10 de sorte que le tube t de circulation du fluide une fois mis en place n'est en contact avec le polystyrène qu'au niveau de ces logements, ce qui garantit un enrobage important de ce tube par le béton assurant de ce fait une bonne diffusion thermique en condition d'utilisation.

Comme visible sur la Figure 1, les rives 13, 14, 15 et 16 de la plaque de polystyrène 10 de la dalle D1 sont munies de moyens d'assemblage 20 et 25 propres à permettre l'assemblage de la dalle D1 avec 4 dalles adjacentes de structure identique telles que D2 et D3 partiellement représentées.

Ces moyens d'assemblage sont de deux types : un type mâle 20 et un type femelle 25, de formes et de dimensions conjuguées.

Dans la réalisation décrite et représentée, les deux rives adjacentes 13 et 14 de la plaque de polystyrène 10 de la dalle D1 sont munies de moyens d'assemblage de type femelle 25, répartis à distance régulière le long de ces rives, tandis que les deux autres rives 15 et 16 de ladite plaque sont munies de moyens d'assemblage de type mâle 20, également régulièrement espacés les uns des autres.

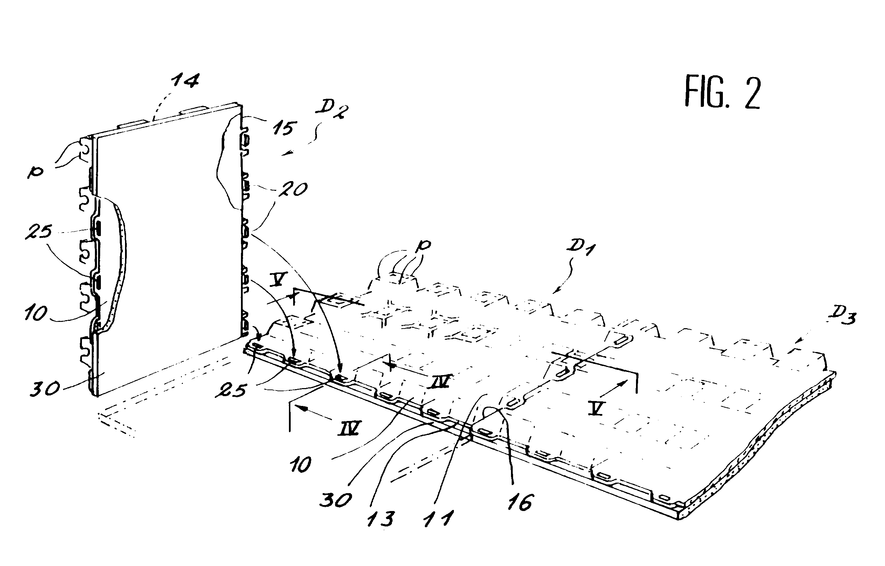

Comme visible sur les Figures 1 et 2, l'assemblage entre deux dalles est obtenu par la coopération des moyens d'assemblage de type mâle 20 situés sur la rive 15 - ou des moyens d'assemblage de type mâle 20 situés sur la rive 16 - de la plaque de polystyrène 10 entrant dans la constitution d'une dalle, dans les moyens d'assemblage de type femelle 25 situés sur la rive 13 - ou dans les moyens d'assemblage de type femelle 25 situés sur la rive 14 - de la plaque de polystyrène 10 entrant dans la constitution d'une dalle adjacente.

La disposition des deux types de moyens d'assemblage est telle que les moyens d'assemblage de type mâle 20 sont logés à la base des portions 15a et 16a des rives 15 et 16 limitant un groupe de plots p tandis que les moyens d'assemblage de type femelle 25 sont ménagés dans l'épaisseur des portions 13b et 14b des rives 13 et 14 séparant deux groupes de plots p, de sorte que l'assemblage entre deux dalles adjacentes conduit automatiquement à une continuité de la disposition en damier des groupes de plots d'une dalle à l'autre.

Comme bien visible sur la Figure 1, les portions 15b et 16b situées entre les portions 15a et 16a des rives 15 et 16 de la plaque de polystyrène 10 sont découpées, de sorte que les moyens d'assemblage de type mâle 20 font saillie au delà desdites portions 15b et 16b des rives 15 et 16.

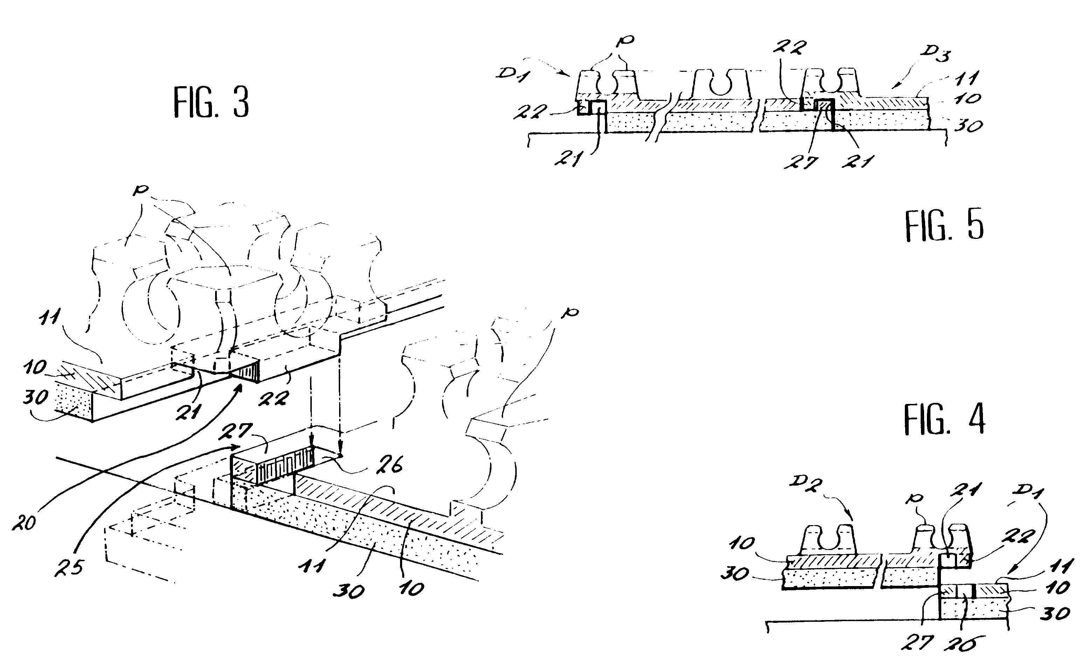

Conformément à la Figure 3, chaque moyen d'assemblage de type mâle 20 est ménagé à la base d'une portion de rive limitant un groupe de plots p et est obtenu par un évidement 21 en forme de C ménagé dans l'épaisseur de la plaque de polystyrène 10. Cet évidement 21 est par exemple tel que le moyen d'assemblage de type mâle 20 a la forme d'une nervure allongée 22 s'étendant parallèlement au bord associé de la plaque de polystyrène 10 et d'épaisseur sensiblement identique à celle de cette plaque.

Chaque moyen d'assemblage de type femelle 25 est ménagé dans une portion de rive séparant deux groupes de plots p et se présente sous la forme d'une ouverture 26 qui traverse l'épaisseur de la plaque de polystyrène 10. Cette ouverture 26 est dimensionnée de sorte à recevoir par emboîtement la nervure 22 d'un moyen d'assemblage de type mâle 20 porté par une dalle adjacente.

Les portions 13a et 14a des rives 13 et 14 situées entre deux moyens d'assemblage de type femelle 25 sont découpées, de sorte que chaque ouverture 26 est limitée vers l'extérieur par un bord latéral 27 en forme de C propre à être reçu, en condition d'assemblage, dans l'évidement 21 qui délimite la nervure 22 d'un moyen d'assemblage de type mâle 20.

Ainsi, comme illustré sur les Figures 4 et 5, l'assemblage de deux dalles adjacentes est obtenu par l'emboîtement d'une part, de la nervure 22 d'un moyen d'assemblage de type mâle 20 dans l'ouverture 26 d'un moyen d'assemblage de type femelle 25 et d'autre part, du bord latéral 27 de ladite ouverture 26 dans l'évidement 21 qui délimite ladite nervure 22, de sorte qu'on obtient, une fois les dalles assemblées, une dalle continue, sans surépaisseur au niveau des moyens d'assemblage.

La structure et la disposition des moyens d'assemblage de type mâle 20 et de type femelle 25 des dalles selon l'Invention autorisent une pose de ces dalles facile, rapide et sûre, en ce sens qu'elles permettent à la fois d'assembler et de positionner les dalles les unes par rapport aux autres en une seule opération.

Comme visible sur les Figures 1 et 2, les rives 15 et 16 de la plaque de polystyrène 10 qui sont munies de moyens d'assemblage de type mâle 20 sont en saillie par rapport aux rives sous-jacentes de la plaque de polystyrène 30 tandis que les rives 13 et 14 de la plaque de polystyrène 10, munies de moyens d'assemblage de type femelle 25, sont en retrait par rapport aux rives sous-jacentes de ladite plaque de polystyrène 30, de sorte que, en condition d'assemblage, la surface de jonction entre deux dalles adjacentes forme une chicane.

Cette disposition particulière permet avantageusement, comme visible sur la Figure 5, d'empêcher toute infiltration de béton entre les dalles mises en condition d'assemblage, lors de la coulée de la dalle de béton destinée à les recouvrir et, ainsi d'éviter la formation de ponts thermiques et de ponts acoustiques susceptibles d'altérer les qualités d'isolation thermique et acoustique de telles dalles.

Les dalles conformes à l'Invention peuvent être réalisées dans différentes dimensions. L'utilisation de dalles mesurant 1,00 x 0,60 m et présentant - conformément à la réalisation représentée sur la Figure 1 - sur leurs rives de plus grande longueur, 5 moyens d'assemblage espacés de 0,20 m et, sur leurs rives de plus petite longueur, 3 moyens d'assemblage également espacés de 0,20 m, s'est révélée être particulièrement avantageuse pour une manutention aisée sur un chantier.

Des dalles constituées d'une plaque de polystyrène expansé 10 de masse volumique supérieure à 28 kg/m³, présentant une épaisseur d'environ 10 mm - à l'exception des endroits où règnent les plots dont la hauteur est comprise entre 25 et 30 mm - et d'une plaque de polystyrène expansé 30 d'une masse volumique inférieure à 15 kg/m³ ayant été soumis à un traitement mécanique d'élastification et présentant une épaisseur d'environ 20 mm, montrent d'excellentes propriétés à la fois d'isolation thermique et d'isolation phonique.

Il est bien entendu possible de réaliser des dalles conformes à l'Invention de différentes épaisseurs en jouant sur l'épaisseur des plaques de polystyrène 10 et 30, de sorte à obtenir des dalles ayant d'excellentes propriétés d'isolation acoustique et présentant une épaisseur - à l'exception des endroits où règnent les plots - nécessaire et suffisante pour assurer la résistance thermique demandée.

Des dalles conformes à l'Invention peuvent être obtenues en assemblant, par exemple par collage, les deux plaques de polystyrène 10 et 30 préalablement réalisées par moulage, la plaque de polystyrène 30 ayant été en outre, préalablement soumise à un traitement mécanique d'élastification.

L'Invention propose toutefois de réaliser des dalles d'isolation comme décrites ci-dessus par un procédé dans lequel la plaque de polystyrène 30 est obtenue à partir d'un bloc en polystyrène expansé ayant été soumis à un traitement mécanique d'élastification tandis que la plaque de polystyrène de masse volumique la plus élevée 10 est surmoulée sur l'une des faces de la plaque de polystyrène de masse volumique la moins élevée.

Le traitement mécanique d'élastification est mis en oeuvre en comprimant un bloc moulé de polystyrène, par exemple à l'aide d'une presse hydraulique, jusqu'à obtenir un écrasement des deux tiers de son épaisseur initiale.

Après suppression de la charge de compression, le bloc de polystyrène recouvre une épaisseur sensiblement égale à 60% de son épaisseur initiale sous l'effet de la reprise élastique et présente une bonne élasticité.

Le bloc est ensuite découpé en plaques rectangulaires de dimensions appropriées à la réalisation de dalles d'isolation conformes à l'Invention et sur lesquelles il est possible de procéder à un surmoulage des plaques de polystyrène 10 de masse volumique plus élevée.

Les plaques de polystyrène 30 sont disposées dans des moules de formes et de dimensions propres à obtenir, à l'issue du surmoulage, des dalles conformes à l'Invention et sont recouvertes sur une de leurs faces de billes de polystyrène présentant une masse volumique apparente appropriée.

Le surmoulage est réalisé dans des conditions (température, pression, ...) conformes à celles d'un moulage en forme de polystyrène expansé. Les billes ainsi introduites dans le moule, en se soudant les unes aux autres ainsi qu'à la plaque de polystyrène 30 permettent d'obtenir une plaque de polystyrène expansé 10, totalement solidaire de la plaque de polystyrène 30.

Avantageusement, le bloc moulé de polystyrène dans lequel est découpée la plaque 30 présente une masse volumique inférieure à 15 kg/m³ tandis que les billes de polystyrène utilisées pour le surmoulage de la plaque 10 ont une masse volumique apparente supérieure à 23 kg/m³ et, de préférence, supérieure à 28 kg/m³.

Ce procédé permet d'obtenir une dalle d'isolation de grande qualité en raison de ce que les deux plaques de polystyrène 10 et 30 qui les constituent présentent une parfaite cohésion supprimant tout risque de désolidarisation que ce soit lors des différentes manipulations auxquelles ces dalles sont soumises (transport, stockage, pose, ...) ou en condition d'utilisation.

De plus, ce procédé permet avantageusement de faciliter le recyclage de ces dalles puisque celles-ci, bien que résultant de l'assemblage de deux matériaux, ne présentent aucune souillure liée à l'utilisation de produits tels que colles, adhésifs, ... classiquement utilisés pour solidariser deux éléments, et peuvent être directement réintroduites dans un processus de fabrication.

## Revendications

1. Dalle d'isolation propre à entrer dans la constitution de systèmes de chauffage et/ou de rafraîchissement intégrés, constituée de deux plaques de polystyrène expansé (10, 30) de masses volumiques différentes, superposées et rendues solidaires par moulage, surmoulage, collage ou tout autre moyen, la plaque de polystyrène de masse volumique la plus élevée (10) ayant des rives munies de moyens d'assemblage (20, 25) propres à permettre l'accrochage et le positionnement de dalles adjacentes, caractérisée en ce que la plaque de polystyrène de masse volumique la plus élevée (10) présente sur sa face opposée (11) à celle au contact de la plaque de polystyrène de masse volumique la moins élevée (30) des groupes de plots (p) qui délimitent des logements pour le support, le guidage et le blocage d'un tube (t) destiné à la circulation d'un fluide chauffant ou réfrigérant, et en ce que la base de ces logements est en saillie par rapport à la face de la plaque de polystyrène de masse volumique la plus élevée sur laquelle se trouvent lesdits plots.

2. Dalle d'isolation selon la Revendication 1, caractérisée en ce que les moyens d'assemblage (20, 25) sont de deux types : mâle (20) et femelle (25), de formes et de dimensions conjuguées.

3. Dalle d'isolation selon la Revendication 2, caractérisée en ce qu'elle est rectangulaire et en ce que deux rives adjacentes (13, 14) de la plaque de polystyrène présentant la masse volumique la plus élevée (10) sont munies de moyens d'assemblage de type mâle (20), tandis que les deux autres rives (15, 16) de ladite plaque sont munies de moyens d'assemblage de type femelle (25).

4. Dalle d'isolation selon la Revendication 3, caractérisée en ce que les groupes de plots (p) sont disposés en damier et en ce que les moyens d'assemblage de type mâle (20) sont logés à la base des portions (15a, 16a) de rives (15, 16) qui limitent un groupe de plots (p) tandis que les moyens d'assemblage de type femelle (25) sont ménagés dans l'épaisseur des portions (13b, 14b) de rives (13, 14) séparant deux groupes de plots (p).

5. Dalle d'isolation selon la Revendication 3 ou la Revendication 4, caractérisée en ce que les rives de la plaque de polystyrène présentant la masse volumique la plus élevée (10) qui sont munies de moyens d'assemblage de type mâle (20) font saillie au delà des rives sous-jacentes de la plaque de polystyrène présentant la masse volumique la moins élevée (30), tandis que les rives de la plaque de polystyrène ayant la masse volumique la plus élevée (10) qui sont munies de moyens d'assemblage de type femelle (25) sont en retrait par rapport aux rives sous-jacentes de la plaque de polystyrène ayant la masse volumique la moins élevée (30).

6. Dalle d'isolation selon l'une quelconque des revendications précédentes, caractérisée en ce que la plaque de polystyrène présentant la masse volumique la plus élevée (10) est une plaque de polystyrène expansé de masse volumique au moins égale à 23 kg/m³ et, de préférence, supérieure à 28 kg/m³, tandis que la plaque de polystyrène présentant la masse volumique la moins élevée (30) est une plaque de polystyrène expansé de masse volumique inférieure à 15 kg/m³ ayant été soumis à un traitement mécanique d'élastification.

7. Dalle d'isolation selon l'une quelconque des revendications précédentes, caractérisée en ce la plaque de masse volumique la plus élevée (10) présente une épaisseur - à l'exception des endroits où règnent les plots (p) - d'environ 10 mm tandis que la plaque de masse volumique la moins élevée (30) présente une épaisseur d'environ 20 mm.

8. Procédé de réalisation d'une dalle d'isolation selon l'une quelconque des revendications 1 à 7, caractérisé en ce qu'il comprend :
a) la réalisation de la plaque de polystyrène de masse volumique la moins élevée (30) en soumettant un bloc de polystyrène expansé à un traitement mécanique d'élastification, puis en découpant dans ce bloc une plaque de dimension appropriée à la réalisation d'une dalle,
b) le surmoulage de la plaque de polystyrène de masse volumique la plus élevée (10) sur l'une des faces de la plaque de polystyrène de masse volumique la moins élevée (30).

9. Procédé selon la revendication 8, caractérisé en ce que le traitement mécanique d'élastification consiste à compresser ledit bloc de polystyrène expansé, par exemple au moyen d'une presse hydraulique, jusqu'à obtenir un écrasement des deux tiers de son épaisseur initiale.

10. Procédé selon la revendication 8 ou la revendication 9, caractérisé en ce que la plaque de polystyrène expansé de masse volumique la plus élevée (10) est surmoulée au moyen de billes de polystyrène de masse volumique apparente supérieure à 23 kg/m³ et, de préférence, supérieure à 28 kg/m³ tandis que la plaque de polystyrène (30) de masse volumique la moins élevée est découpée dans un bloc de polystyrène expansé de masse volumique inférieure à 15 kg/m³.

## Patentansprüche

1. Isolationsplatte bzw. -fliese, die dazu geeignet ist, zum Aufbau von integrierten Heiz- und/oder Kühlsystemen zu dienen, gebildet von zwei Platten (10, 30) aus expandiertem Polystyrol von unterschiedlicher spezifischer Masse, die übereinandergelegt und durch Formung, Überformung, Klebung oder jedes andere Mittel kraftschlüssig verbunden bzw. wechselseitig haftend gemacht sind, wobei die Polystyrolplatte (10) von höchster spezifischer Masse Randstreifen hat, die mit Verbindungsmitteln (20, 22) versehen sind, welche geeignet sind, das Einhängen bzw. Befestigen und die Positionierung von benachbarten Platten bzw. Fliesen zu gestatten, dadurch **gekennzeichnet**, daß die Polystyrolplatte (10) von höchster spezifischer Masse auf ihrer Fläche (11), welcher jener entgegengesetzt ist, die in Kontakt mit der Polystyrolplatte (30) von kleinster spezifischer Masse ist, Gruppen von Klötzen (p) aufweist, welche Sitze für die Auflagerung, die Führung und die Arretierung eines Rohrs (t) begrenzen, das für die Zirkulation eines heizenden oder kühlenden Fluids bestimmt ist, und daß die Basis dieser Sitze mit Bezug auf die Fläche der Polystyrolplatte von höchster spezifischer Masse, auf welcher sich die genannten Klötze befinden, vorspringend ist.

2. Isolationsplatte bzw. -fliese gemäß Anspruch 1, dadurch **gekennzeichnet**, daß die Verbindungsmittel (20, 25) von zwei Arten sind: hervorstehend (20) und aufnehmend (25), von konjugierten Formen und Dimensionen.

3. Isolationsplatte bzw. -fliese gemäß Anspruch 2, dadurch **gekennzeichnet,** daß sie rechteckig ist und daß zwei benachbarte Randstreifen (13, 14) der Polystyrolplatte (10), welche die höchste spezifische Masse aufweist, mit Verbindungsmitteln vom hervorstehenden Typ (20) versehen sind, während die beiden anderen Randstreifen (15, 16) der genannten Platte mit Verbindungsmitteln vom aufnehmenden Typ (25) versehen sind.

4. Isolationsplatte bzw. -fliese gemäß Anspruch 3, dadurch **gekennzeichnet,** daß die Gruppen von Klötzen (p) schachbrettartig angeordnet sind und daß die Verbindungsmittel vom hervorstehenden Typ (20) an der Basis der Teile (15a, 16a) der Randstreifen (15, 16) untergebracht sind, welche eine Gruppe von Klötzen (p) begrenzen, während die Verbindungsmittel vom aufnehmenden Typ (25) in der Dicke der Teile (13b, 14b) der Randstreifen (13, 14) ausgespart bzw. angeordnet sind, welche zwei Gruppen von Klötzen (p) trennen.

5. Isolationsplatte bzw. -fliese gemäß Anspruch 3 oder Anspruch 4, dadurch **gekennzeichnet**, daß die Randstreifen der Polystyrolplatte (10), welche die höchste spezifische Masse aufweist, die mit Verbindungsmitteln vom hervorstehenden Typ (20) versehen sind, über die darunterliegenden Randstreifen der Polystyrolplatte (30), welche die kleinste spezifische Masse aufweist, hervorspringen, während die Randstreifen der Polystyrolplatte (10), welche die größte spezifische Masse hat, die mit Verbindungsmitteln vom aufnehmenden Typ (25) versehen sind, mit Bezug auf die darunterliegenden Randstreifen der Polystyrolplatte (30), welche die kleinste spezifische Masse hat, zurückgesetzt sind.

6. Isolationsplatte bzw. -fliese gemäß irgendeinem der vorhergehenden Ansprüche, dadurch **gekennzeichnet**, daß die Polystyrolplatte (10), welche die größte spezifische Masse aufweist, eine Platte aus expandiertem Polystyrol mit einer spezifischen Masse von wenigstens gleich 23 kg/m³, und vorzugsweise von über 28 kg/m³, ist, während die Polystyrolplatte (30), welche die kleinste spezifische Masse aufweist, eine Platte aus expandiertem Polystyrol mit einer spezifischen Masse unterhalb von 15 kg/m³ ist, die einer mechanischen Behandlung der Elastifizierung ausgesetzt worden ist.

7. Isolationsplatte bzw. -fliese gemäß irgendeinem der vorhergehenden Ansprüche, dadurch **gekennzeichnet**, daß die Platte (10) von höchster spezifischer Masse eine Dicke - mit Ausnahme der Stellen, wo die Klötze (p) vorherrschen - von ungefähr 10 mm hat, während die Platte (30) von kleinster spezifischer Masse eine Dicke von ungefähr 20 mm aufweist.

8. Verfahren zur Herstellung einer Isolationsplatte bzw. -fliese gemäß irgendeinem der Ansprüche 1 bis 7, dadurch **gekennzeichnet**, daß es folgendes umfaßt:
a) die Herstellung der Polystyrolplatte (30) von kleinster spezifischer Masse, indem man einen Block aus expandiertem Polystyrol einer mechanischen Behandlung der Elastifizierung unterwirft, indem man danach aus diesem Block eine Platte der Dimension herausschneidet, die zur Herstellung einer Platte bzw. Fliese geeignet ist,
b) das Auf- bzw. Überformen der Polystyrolplatte (10) von größter spezifischer Masse auf die eine bzw. der einen der Flächen der Polystyrolplatte (30) von kleinster spezifischer Masse.

9. Verfahren gemäß Anspruch 8, dadurch **gekennzeichnet**, daß die mechanische Behandlung der Elastifizierung darin besteht, den genannten Block aus expandiertem Polystyrol zusammenzudrücken, z.B. mittels einer hydraulischen Presse, bis man eine Zusammendrückung von zwei Dritteln ihrer anfänglichen Dicke erhält.

10. Verfahren gemäß Anspruch 8 oder Anspruch 9, dadurch **gekennzeichnet**, daß die Platte (10) aus expandiertem Polystyrol von höchster spezifischer Masse mittels Kugeln aus Polystyrol von einer offen- bzw. scheinbaren spezifischen Masse von über 23 kg/m³, und vorzugsweise von über 28 kg/m³, ist, auf- bzw. übergeformt wird, indes die Polystyrolplatte (30) von kleinster spezifischer Masse aus einem Block von expandiertem Polystyrol mit einer spezifischen Masse, die unterhalb von 15 kg/m³ ist, herausgeschnitten wird.

## Claims

1. Insulating tile suitable for being incorporated into the construction of integrated heating and/or air-conditioning systems, consisting of two superposed expanded-polystyrene sheets (10, 30) of different densities which are joined together by moulding, overmoulding, adhesive bonding or any other means, the higher-density polystyrene sheet (10) having edges provided with means of assembly (20, 25) which are suitable for fastening and positioning adjacent tiles, characterized in that the higher-density polystyrene sheet (10) has, on its face (11) opposite that in contact with the lower-density polystyrene sheet (30), groups of mounts (p) which delimit housings for the support, guiding and locking of a pipe (t), which is intended for the flow of a heating fluid or refrigerant, and in that the base of these housings projects from that face of the higher-density polystyrene sheet on which the said mounts are located.

2. Insulating tile according to Claim 1, characterized in that the means of assembly (20, 25) are of two types - male (20) and female (25) - and have conjugate shapes and sizes.

3. Insulating tile according to Claim 2, characterized in that it is rectangular and in that two adjacent edges (13, 14) of the polystyrene sheet (10) having the higher density are provided with male-type means of assembly (20) while the other two edges (15, 16) of the said plate are provided with female-type means of assembly (25).

4. Insulating tile according to Claim 3, characterized in that the groups of mounts (p) are arranged in a checkered pattern and in that the male-type means of assembly (20) are housed in the base of those portions (15a, 16a) of the edges (15, 16) which limit a group of mounts (p) while the female-type means of assembly (25) are made in the thickness of those portions (13b, 14b) of the edges (13,14) which separate two groups of mounts (p).

5. Insulating tile according to Claim 3 or Claim 4, characterized in that those edges of the polystyrene sheet (10) having the higher density which are provided with male-type means of assembly (20) project beyond the subjacent edges of the polystyrene sheet (30) having the lower density while those edges of the polystyrene sheet (10) having the higher density which are provided with female-type means of assembly (25) are set back with respect to the subjacent edges of the polystyrene sheet (30) having the lower density.

6. Insulating tile according to any one of the preceding claims, characterized in that the polystyrene sheet (10) having the higher density is an expanded-polystyrene sheet having a density at least equal to 23 kg/m³, and preferably greater than 28 kg/m³, while the polystyrene sheet (30) having the lower density is an expanded-polystyrene sheet having a density of less than 15 kg/m³ which has been subjected to a mechanical elastication treatment.

7. Insulating tile according to any one of the preceding claims, characterized in that the higher-density sheet (10) has a thickness - apart from at the points where there are mounts (p) - of approximately 10 mm while the lower-density sheet (30) has a thickness of approximately 20 mm.

8. Process for producing an insulating tile according to any one of Claims 1 to 7, characterized in that it comprises:
a) producing the lower-density polystyrene sheet (30) by subjecting an expanded-polystyrene block to a mechanical elastication treatment and then by cutting out of this block a sheet having a size suitable for producing a tile;
b) overmoulding the higher-density polystyrene sheet (10) on one of the faces of the lower-density polystyrene sheet (30).

9. Process according to Claim 8, characterized in that the mechanical elastication treatment consists in compressing the said expanded-polystyrene block, for example by means of a hydraulic press, until it is compressed to two thirds of its initial thickness.

10. Process according to Claim 8 or Claim 9, characterized in that the higher-density expanded-polystyrene sheet (10) is overmoulded by means of polystyrene balls having an apparent density greater than 23 kg/m³, and preferably greater than 28 kg/m³, while the lower-density polystyrene sheet (30) is cut out from a block of expanded polystyrene having a density of less than 15 kg/m³.
